# EUROPEAN PATENT SPECIFICATION

(11) **EP 1 241 721 B1**
(45) Date of publication and mention of the grant of the patent: **12.07.2006**
(21) Application number: 02004641.3
(22) Date of filing: 28.02.2002
(51) Int. Cl.: H01M 4/52, H01M 4/32

(54) **Positive electrode active material for alkaline storage battery, positive electrode using the same and method of producing the same**
Positives aktives Elektrodenmaterial für alkalische Speicherbatterie, positive Elektrode dafür und Verfahren zu ihrer Herstellung
Matière active d'électrode positive pour accumulateur alcalin, électrode positive l'utilisant et sa méthode de fabrication

(30) Priority: 13.03.2001 JP 2001071183
(43) Date of publication of application: 18.09.2002
(73) Proprietor: MATSUSHITA ELECTRIC INDUSTRIAL CO., LTD., Kadoma-shi, Osaka 571-8501 (JP)
(72) Inventor: Tanigawa, Futoshi, Matsushita Elec. Ind. Co., Ltd., Kadoma-shi, Osaka 571-8501 (JP); Nakamura, Yasushi, Matsushita Elec. Ind. Co., Ltd., Kadoma-shi, Osaka 571-8501 (JP); Yuasa, Kohji, Matsushita Elec. Ind. Co., Ltd., Kadoma-shi, Osaka 571-8501 (JP); Kuranaka, So, Matsushita Elec. Ind. Co., Ltd., Kadoma-shi, Osaka 571-8501 (JP)
(74) Representative: TBK-Patent

(56) References cited:
- EP-A- 0 789 412
- EP-A- 0 932 211
- US-A- 5 506 076
- US-A- 5 569 444
- US-A- 5 965 295
- US-A- 6 040 007
- PATENT ABSTRACTS OF JAPAN vol. 1995, no. 07, 31 August 1995 (1995-08-31) -& JP 07 094182 A (SHIN KOBE ELECTRIC MACH CO LTD), 7 April 1995 (1995-04-07)
- PATENT ABSTRACTS OF JAPAN vol. 1999, no. 14, 22 December 1999 (1999-12-22) -& JP 11 260360 A (TOSHIBA BATTERY CO LTD), 24 September 1999 (1999-09-24)
- CORRIGAN D A ET AL: "EFFECT OF COPRECIPITATED METAL IONS ON THE ELECTROCHEMISTRY OF NICKEL HYDROXIDE THIN FILMS: CYCLIC VOLTAMMETRY IN 1M KOH" JOURNAL OF THE ELECTROCHEMICAL SOCIETY, ELECTROCHEMICAL SOCIETY. MANCHESTER, NEW HAMPSHIRE, US, vol. 136, no. 3, 1 March 1989 (1989-03-01), pages 723-728, XP000053110 ISSN: 0013-4651
- WEN-HUA Z ET AL: "A study of the electrochemistry of nickel hydroxide electrodes with various additives" JOURNAL OF POWER SOURCES, ELSEVIER SEQUOIA S.A. LAUSANNE, CH, vol. 56, no. 1, 1 July 1995 (1995-07-01), pages 75-79, XP004044369 ISSN: 0378-7753
- PATENT ABSTRACTS OF JAPAN vol. 008, no. 272 (E-284), 13 December 1984 (1984-12-13) -& JP 59 143272 A (SANYO DENKI KK), 16 August 1984 (1984-08-16)

## Description

### BACKGROUND OF THE INVENTION

The present invention relates to a positive electrode active material capable of yielding a high-capacity alkaline storage battery, a positive electrode using the same and a method of producing the same. More specifically, the present invention relates to a method of producing a positive electrode wherein the physical properties of a positive electrode active material is optimized to facilitate the control of manufacturing process and to reduce variations in the filled amounts of the active material into the electrodes.

At present, secondary batteries are installed in portable devices, typified by cellular phones and notebook-size personal computers. Accordingly, there has been a strong demand for secondary batteries having an increased capacity. In response to such demand, studies have been carried out in order to obtain a high-capacity positive electrode for use in alkaline storage batteries such as nickel-cadmium storage batteries and nickel-metal hydride storage batteries. As methods for obtaining a high-capacity positive electrode, a method of filling a large amount of an active material into a positive electrode, and another method of improving the utilization of the active material itself are being investigated.

As a positive electrode with a large filled amount of the active material, a sintered type positive electrode has heretofore been employed, which is fabricated by precipitating nickel hydroxide in a substrate having a pore size of 10 µm and a porosity of approximately 80% made of sintered nickel powders. Also, as a substitute for the above electrode, a so-called paste type positive electrode is being developed, which is fabricated by directly filling nickel hydroxide powders into a foamed metal core of a three-dimentional structure having a pore size of 500 um and a porosity of approximately 95% (hereinafter, referred to as a foamed metal sheet).

It is effective to use, as nickel hydroxide to be filled into the foamed metal sheet, spherical, substantially spherical, or oval-shaped nickel hydroxide particles in place of conventional indefinite shape nickel hydroxide particles (Japanese Examined Patent Publication No. Hei 4-80513). The spherical, substantially spherical or oval-shaped nickel hydroxide powder is generally obtained through precipitation by neutralization. In this method, an acidic aqueous solution of nickel is added dropwise into an aqueous alkaline solution in a reaction vessel under stirring, while an aqueous alkaline solution is added dropwise in the reaction vessel so as to maintain the pH of the solution in the vessel at a fixed value. The concentrations and flow rates of the respective solutions to be added into the reaction vessel are controlled and the solution in the reaction vessel is retained for a certain period of time, whereby the formation of core particles and the growth of the particles are successively performed. During this process, the particles are subjected to shearing force due to stirring and are gradually formed into a spherical shape.

The following two types of techniques are examples of the technique for improving the utilization of the active material.

The first is a technique for either modifying or improving the crystallinity or crystal structure of nickel hydroxide. Nickel hydroxide has a layered structure of hexagonal system. Since the charge/discharge reaction accompanies the entering and leaving of protons to and from such crystal, it is desired to orient the crystal alignment of nickel hydroxide in the c-axis direction in order to increase the utilization of the active material. This shortens the distance of the proton transfer in the solid phase and increases the area of the reaction site. Herein, the crystal state or crystallinity of the active material is able to be determined from the intensity or full width at half maximum (FWHM) of a peak attributed to (001) face, (100) face, (101) face or the like in the X-ray diffraction pattern (Japanese Pat. No. 3,080,441).

In addition, another technique has been employed, which controls the crystal structure of nickel hydroxide during charging/discharging by adding Co, Cd, Zn, Mg, Ca, Sr, Ba, Al, Mn or the like in the crystal of nickel hydroxide. This can suppress the degradation of the electrode due to the change of the crystal structure, whereby high utilization of the active material is able to be maintained for a long period (See Japanese Unexamined Patent Publication No. Hei 3-78965).

The second is a technique for remarkably improving the utilization of nickel hydroxide by adding a conductive agent, particularly a cobalt compound, into nickel hydroxide. Since a foamed metal sheet has a large pore size and nickel hydroxide has a poor conductivity, it is effective to add a conductive agent into a paste type positive electrode. For example, in the case where cobalt hydroxide is used as a conductive agent, cobalt hydroxide is converted into electrically conductive cobalt oxyhydroxide and deposited on the surface of nickel hydroxide particles during the initial charging after the assembly of the battery. Thus, the utilization of the active material is increased by as much as several tens of percents as compared with the case where cobalt hydroxide is not used (Japanese Unexamined Patent Publication No. Sho 61-49374). In addition, a coating technique for effectively placing a small amount of cobalt on the surface of nickel hydroxide particles (U.S. Pat. 6,040,007), a modification technique for improving the electrical conductivity of cobalt have been employed. These techniques have further improved the utilization of nickel hydroxide (Japanese Unexamined Patent Publication No. Hei 11-97008).

In an alkaline storage battery, a gas generated at the end of discharging needs to be absorbed into the negative electrode. Therefore, the negative electrode is required to be provided with a larger capacity than the positive electrode. Further, when there are significant variations in the capacity of the positive electrodes, it is necessary to make the capacity of the negative electrode larger than normally required, in consideration of the largest possible capacity of the positive electrode. From this, it is considered that reducing variations in the filled amounts or utilizations of the active material in the positive electrodes is also important in order to provide a battery with an increased capacity. By reducing variations in the capacity of the positive electrodes to decrease the capacity of the negative electrode, a larger amount of the positive electrode active material is able to be filled into the battery.

However, in the case of a paste type positive electrode, it is difficult to reduce variations in the capacity of the positive electrodes. A paste type positive electrode is fabricated by mixing a nickel hydroxide powder with a dispersion medium such as water to form a paste, filling the paste in a foamed metal sheet, drying and rolling the sheet. In this case, the changes of, for example, the particle shape, particle size distribution and specific surface area of the nickel hydroxide powder pose the following problems on the paste.
(1) The viscosity and flowability of the paste change to cause variations in the operations of filling the paste into the foamed metal sheet, thereby fluctuating the filled amount of the positive electrode active material.
(2) Although increasing water content in the paste improves the properties of the paste, it results in a relatively lower amount of the active material in the paste, thereby decreasing the filled amount of the paste into the foamed metal sheet.
(3) Although adding a thickener stabilizes the properties of the paste, the thickener decomposes inside the battery, thereby reducing the high-rate charge/discharge characteristics as well as charge/discharge cycle characteristics.
(4) Even when the rolling is performed under a fixed condition, the density of the active material of the obtained molded sheet (paste type positive electrode) fluctuates.

The above-described problems are considered to be attributed to the fact that particles having protuberances and hollows of various sizes, for example, gourd-shaped particles are present in a large amount within the nickel hydroxide powder used for preparing the paste.

U.S. Patent No. 6,040,007 discloses high-density nickel powders which are produced by forming an α- or β-cobalt hydroxide layer on the surfaces of and within pores of nickel hydroxide particles. The coated nickel hydroxide particles can be used as the positive electrode active material in alkali batteries.

JP-A-05-240836 describes a nickel-hydroxide powder in which the ratio of the peak intensity of the (001) plane to the (101) plane is 1.0-1.3 and wherein the half-value width of the peak of the (101) plane is in the range of 0.8-1.1.

EP-A-0 932 211 refers to a β-Ni(OH)₂-type nickel oxide (including hydroxide) which contains Mn in the state of a solid solution or in a co-precipitated state with an average valence of Mn being 3.3 or more as a positive electrode active material.

U.S. Patent No. 5,965,295 is inter alia concerned with a positive electrode which comprises a conductive substrate and a mixture held by the conductive substrate, the mixture containing nickel hydroxide and a conductive cobalt compound, and the positive electrode has pores wherein substantially all of the pores each have a diameter in the range of 0.0001 µm to 10 µm.

EP-A-0 789 412 mentions a nonaqueous secondary battery wherein at least one of the positive and negative electrode sheets is prepared from a mixture paste which has a pH of 5 to 10 and wherein the thickness of the electrode material mixture on one side of the negative electrode is 5 to 80 µm and that of the positive electrode is 90 to 180 µm in the battery assembly.

In order to solve the foregoing problems, the inventors of the present invention studied the relation in detail between the physical properties of the active material and each of the flowability of the paste and the density of the active material in the electrode. As a result, the inventors found that an active material which satisfies all of the following requirements (1) to (5) is able to yield a high-capacity electrode, thus accomplishing the present invention.

More specifically, the present invention relates to a positive electrode active material for an alkaline storage battery comprising: at least one powder selected from the group consisting of a nickel hydroxide powder and a nickel oxyhydroxide powder, wherein the nickel hydroxide powder has an X-ray diffraction pattern where a full width at half maximum (FWHM) of a peak attributed to (101) face is from not less than 0.7 deg/2θ to not more than 1.2 deg/2θ and a peak intensity ratio of a peak attributed to (001) face to a peak attributed to (101) face is not less than 1.1, wherein
(1) the positive electrode active material has a mean particle circularity from not smaller than 0.95 to 1,
(2) the positive electrode active material has a mean particle size from not smaller than 5 µm to not larger than 20 µm on a volume basis, and
(3) the positive electrode active material has a specific surface area from not smaller than 5 m²/g to not larger than 20 m²/g.

In particular, the particle circularity of an active material is considered to have a great influence on the flowability of an electrode paste and the active material density of an electrode. Generally, in a nickel hydroxide powder obtained through precipitation by neutralization process under stirring, primary particles and secondary particles are either bonded to one another or aggregated within the same group. Accordingly, conventional active materials contain particles having many protuberances and hollows on the surfaces thereof. Among such particles, a particle which has grown without being subjected to shearing force caused by stirring on its surface has a considerably low circularity because of the irregular crystal growth.

It is preferred that the whole or a portion of the positive electrode active material have a cobalt compound on the surface thereof. In other words, it is preferred that the whole or a portion of at least one selected from the nickel hydroxide powder and the nickel oxyhydroxide powder has a cobalt compound on the surface thereof.

It is also preferred that the nickel hydroxide powder comprise a solid solution nickel hydroxide containing at least one ion selected from the group consisting of Co, Cd, Zn, Mg, Ca, Sr, Ba, Al and Mn.

Further, it is preferred that the nickel oxyhydroxide powder comprise a solid solution nickel oxyhydroxide containing at least one ion selected from the group consisting of Co, Cd, Zn, Mg, Ca, Sr, Ba, Al and Mn.

It is preferred that the number of particles having a circularity of not larger than 0.85 account for not more than 5% of the number of total particles within the positive electrode active material. In addition, it is further preferred that at a point where a cumulative volume accounts for 10% of the total volume in a volume basis size distribution of particles within the positive electrode active material, the particle size be not smaller than one-third of the mean particle size of the active material.

The volume basis size distribution of particles within the active material as used herein means the distribution which demonstrates the relation between the size of particles contained in the active material and the cumulative volume of the particles.

The present invention also relates to a positive electrode for an alkaline storage battery which includes the above positive electrode active material.

The present invention further relates to a method of producing a positive electrode for an alkaline storage battery comprising the steps of: (a) preparing a paste containing the above positive electrode active material; and (b) adding the paste to a metal substrate serving as a current collector and then rolling the substrate with the paste to form an electrode plate.

As described above, the present invention is attained with an idea of converting the shape of the active material particles into a numerical value and control the same, thereby making it possible to provide an active material of substantially uniform shape. Further, the present invention employs an active material of substantially uniform shape to control the physical properties of a paste containing the active material and to reduce variations in the filled amounts of the active material in the positive electrodes, thereby constantly supplying a high-capacity battery. Moreover, according to the present invention, since the shapes of particles contained in the active material are made uniform, the particles become less distorted during the charging/discharging of the battery to suppress the degradation of the electrode due to swelling with the electrolyte, so that a battery with a long cycle life is able to be obtained.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

Fig. 1 is a diagram for illustrating the definition of a particle circularity.
Fig.2 shows graphs respectively depicting: (a) distribution demonstrating the relation between the circle equivalent diameter and the particle circularity; (b) number basis circularity distribution; and (c) volume basis size distribution, of the particles contained in Powder of Example 3.
Fig. 3 shows images of the particles contained in Powder of Example 3: image (a) of particles having a size from not smaller than 10 µm to not larger than 20 µm; and image (b) of particles having a size from not smaller than 5 µm to smaller than 10 µm.
Fig. 4 shows images of the particles contained in Powder of Comparative Example 1: image (a) of particles having a size from not smaller than 10 µm to not larger than 20 µm; and image (b) of particles having a size from not smaller than 5 µm to smaller than 10 µm.
Fig. 5 shows graphs (a) to (d) respectively depicting the filled amount distributions of the active materials in Positive electrodes of Examples 1 to 3 and Comparative Example 1.

### DETAILED DESCRIPTION OF THE INVENTION

A positive electrode active material for an alkaline storage battery in accordance with the present invention is characterized by its physical properties relating to the size, shape and the like. In particular, the most remarkable feature of the positive electrode active material lies in that a mean value of particle circularity is from not less than 0.95 to 1. A positive electrode in accordance with the present invention is able to be produced by preparing a paste containing the positive electrode active material, filling or applying the paste to a metal substrate serving as a current collector, rolling the substrate with the active material and then forming it into an electrode plate.

Recently, particle image analysis is being vigorously employed in order to obtain detailed information on the size or the shape of fine particles. Particle image analysis is also employed as the most basic method for measuring particle sizes. A particle circularity determined by this method is regarded as one of the common characteristics in the field of the battery active material (Japanese Unexamined Patent Publication No. 2000-226206).

In order to capture the image of a particle, a so-called flat sheath flow utilizing hydrodynamics is employed. A suspension of particles aspirated into a particle image analyzer is introduced into a flat cell and transformed into a flat sample flow. The sample flow is irradiated with a stroboscopic light and then images of particles passing through the cell are captured as still images by a CCD camera via an objective lens. Each particle in the sample flow is hydrodynamically controlled so as to pass through the center of the cell. Accordingly, particle images are always captured in focus. In general, each captured particle image is analyzed in real time. The circle equivalent diameter and the particle circularity are calculated from the area and perimeter of the projected image of the particle.

The irradiation of a stroboscopic light is performed at an interval of approximately 1/30th of a second, and then images of particles present within the frame of the camera are captured. After a predetermined number of images are captured, the number of particles contained in the sample flow per unit volume is quantitatively determined from the number of the particle images, the number of particles, the thickness of the cell and the size of the frame. Accordingly, the mean value of particle circularity is able to be calculated on a number basis, whereas the particle size distribution is able to be calculated on either a number or volume basis.

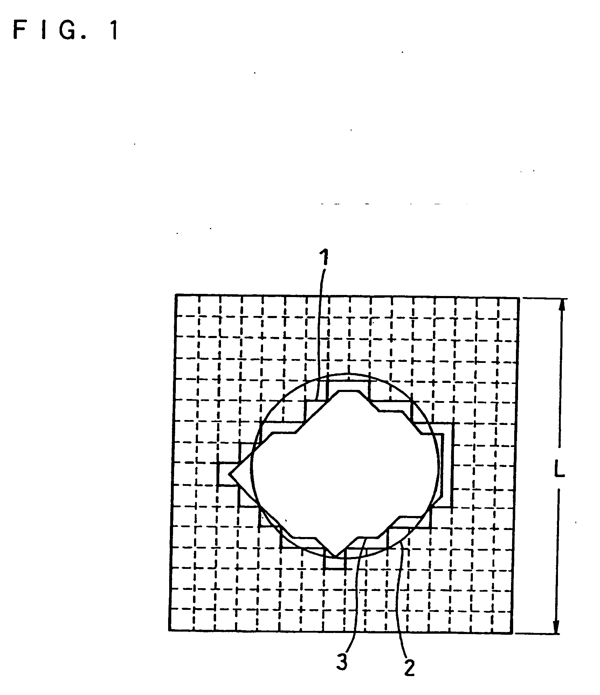

Next, the definition of a particle circularity will be described by referring to FIG. 1.

A circularity of a particle is a value obtained by dividing the perimeter of an equivalent circle having the same projected area as the projected image of the particle, by the perimeter of the projected image of the particle. In order to obtain a particle circularity, the projected images of captured particles are classified according to the sizes. In the case of the flow type particle image analyzer FPIA-2100 manufactured by Sysmex, which was used in the examples described later, the projected images of particles are classified into seven different groups according to the sizes. Each projected particle image is divided into 512 × 512 pixels and each pixel is binarized.

FIG. 1 shows an example of a binarized projected particle image 1. In the case where the above-mentioned analyzer FPIA-2100 is used, the length of side "L" of the equilateral rectangle including the projected particle image 1 is from 1 to 160 µm. Next, an equivalent circle 2 having the same projected area as the projected particle image 1 is obtained. The diameter of the equivalent circle 2 is calculated as a circle equivalent diameter and used as a particle size. Further, the length of a frame 3, which is obtained by connecting the central points of the pixels located on the outermost periphery of the projected particle image 1, is determined as the perimeter of the projected particle image. Then, the particle circularity is obtained by dividing the perimeter of the equivalent circle 2 by the perimeter of this projected particle image, that is, the length of the frame 3.

The particle circularity is 1 when the projected particle image is a perfect circle and is less than 1 when the projected particle image is oblong or has unevenness. For example, the particle circularity of an equilateral hexagon is 0.952, that of an equilateral pentagon is 0.930, that of an equilateral tetragon is 0.886 and that of an equilateral triangle is 0.777. In the case of tetragons, the particle circularity of a tetragon with an aspect ratio of 1:5 is 0.660, that of a tetragon with an aspect ratio of 1:7 is 0.586 and that of a tetragon with an aspect ratio of 1:17 is 0.405. In the case of particles of indefinite shape, the mean particle circularity slightly varies according to the scaling factor of the projected image or the number of pixels. However, it is considered that there is no substantial difference in mean circularity among particles of indefinite shape as long as commercially available particle image analyzers are used.

The mean value of the particle circularity of particles contained in an active material of the present invention is from not less than 0.95 to 1. When the mean circularity decreases to less than 0.95, the properties of the paste containing the active material become unstable, thus reducing the active material density in the positive electrode as well as the capacity of the positive electrode. Moreover, the high-rate discharge characteristic of the battery is deteriorated.

Further, the number of particles having a circularity of not larger than 0.85 preferably accounts for not more than 5% of the number of total particles contained in the active material of the present invention. When the number of particles having a circularity of not larger than 0.85 accounts for more than 5% of the number of total particles, the properties of the paste may become unstable even if the mean value of the particle circularity is from not less than 0.95 to not more than 1. Furthermore, the capacity of the positive electrode or the cycle life of the battery may be decreased.

An active material having a mean particle circularity from not smaller than 0.95 to 1, wherein the number of particles having a circularity of not larger than 0.85 accounts for not more than 5% of the number of total particles, is able to be obtained by applying shearing force stronger than that conventionally applied, to nickel hydroxide particles growing in the reaction vessel. With the use of such active material, the properties of the paste are stabilized, and the adding amounts of the dispersion medium, thickener and the like are able to be reduced to a minimum, thereby increasing the active material density in an electrode.

In a volume basis size distribution of particles within the active material, when the particle size coordinate at a point where the cumulative volume accounts for 10% of the total volume is not smaller than one-third of the mean particle size of the active material, the particles contained in the active material have a uniform size, so that variations in the properties of the pastes are further reduced. A powder comprising such particles is able to be obtained, for example, by narrowing the range of the manufacturing and control conditions of the powder, or by classifying the powder. More specifically, it is effective to increase the stirring rate of the powder dispersion in a reaction vessel during the powder manufacturing, and to strictly control the temperature, the pH and the like of the aqueous solution in the reaction vessel during the neutralization process.

An active material in accordance with the present invention preferably has a mean particle size from not smaller than 5 µm to not larger than 20 µm on a volume basis. When the mean particle size of the active material is from not smaller than 5 µm to not larger than 20 µm on a volume basis, it is possible to produce a high-density electrode exhibiting high utilization for a long period. When the mean particle size of the active material is less than 5 µm on a volume basis and a conductive agent is added in a positive electrode, each particle within the active material is difficult to be applied with particles of the conductive agent. Therefore, the conductive network is poorly formed in the electrode, resulting in a decrease in the utilization of the active material. Conversely, when the mean particle size of the active material exceeds 20 µm on a volume basis, the inner part of the particle hardly participates in the charge/discharge reaction, thereby reducing the utilization of the active material.

From the same point of view, the active material in accordance with the present invention preferably has a specific surface area from not smaller than 5 m²/g to not larger than 20 m²/g. When the specific surface area of the active material is less than 5 m²/g, the surface area of the active material particle, which participates in charging/discharging, is reduced, thereby decreasing the utilization of the active material. Conversely, when the specific surface area of the active material exceeds 20 m²/g, the number of pores within the particles increases, so that a large amount of water is required for the preparation of the paste. Furthermore, this results in an uneven distribution of electrolyte in the battery, reducing the utilization of the active material at a high-rate discharge.

In an active material in accordance with the present invention, at least the above-described nickel hydroxide powder has an X-ray diffraction pattern where a FWHM of a peak attributed to (101) face is from not less than 0.7 deg/2θ to not more than 1.2 deg/2θ and a peak intensity ratio of a peak attributed to (001) face to a peak attributed to (101) face is not less than 1.1. When the nickel hydroxide powder has such X-ray diffraction pattern, it is possible to produce an electrode having an even higher active material density and exhibiting high utilization for a long period. When the FWHM is less than 0.7 deg/2θ, the crystallinity of nickel hydroxide is extremely high, or the crystal of nickel hydroxide grows in the a-axis direction. Accordingly, the charge/discharge reaction does not proceed smoothly, thereby reducing the utilization of the active material. Conversely, when the FWHM exceeds 1.2 deg/2θ, the crystal structure of nickel hydroxide is disordered and thus the structure is difficult to be maintained for a long period, shortening the cycle life of the obtained battery. When the peak intensity ratio is less than 1.1, the crystal structure of nickel hydroxide grows in the a-axis direction. Therefore, the charge/discharge reaction does not proceed smoothly, reducing the utilization of the active material.

It is preferred that the nickel hydroxide powder comprise a solid solution nickel hydroxide containing at least Co, Cd, Zn, Mg, Ca, Sr, Ba, Al, Mn or the like. It is preferred that such elements other than Ni be contained in the solid solution nickel hydroxide at 3 to 15 mol% to the amount of nickel in the solid solution.

It is also preferred that the nickel hydroxide powder contain nickel hydroxide particles having a cobalt compound attached to the surface thereof. The nickel hydroxide particle having a cobalt compound attached to the surface thereof includes a nickel hydroxide particle having a cobalt compound precipitated on the surface thereof and a nickel hydroxide particle on which a cobalt compound is simply applied and the like. Also, a portion or the whole of the particle surface may be coated with a cobalt compound.

As the above-mentioned cobalt compound, for example, cobalt hydroxide and cobalt oxyhydroxide may be preferably used. Herein, the cobalt oxyhydroxide includes any cobalt oxyhydroxide in which Co has a mean oxidation number of more than 2 and not more than 3.67. Particularly, a cobalt compound in which Co has an oxidation number of not less than 3.0 and which contains an alkali cation is preferably used.

The nickel hydroxide powder may be used after being subjected to oxidation using, for example, an oxidant in an aqueous alkaline solution. In this case, the nickel hydroxide powder is entirely or partially oxidized and converted into a nickel oxyhydroxide powder. Herein, the nickel oxyhydroxide includes any nickel oxyhydroxide in which Ni has a mean oxidation number of more than 2 and not more than 3.67. In the case where the nickel hydroxide powder has cobalt hydroxide on the surface thereof, the cobalt hydroxide may be oxidized simultaneously with the nickel hydroxide.

The amount of the cobalt compound to be attached to the active material is preferably from 3 to 15 parts by weight per 100 parts by weight of the sum of nickel hydroxide and nickel oxyhydroxide contained in the active material.

Herein, since the crystallinity of a nickel oxyhydroxide powder significantly varies depending on the oxidation state, it is not necessary to control the FWHM or the peak intensity ratio in an X-ray diffraction pattern as described above. On the other hand, it is effective to control the FWHM or peak intensity ratio in an X-ray diffraction pattern of a nickel hydroxide powder as a starting powder before oxidation to produce a nickel oxyhydroxide powder as described above.

The above-mentioned nickel hydroxide powder is able to be prepared as follows.

To an aqueous alkaline solution having a constant pH in the range from 10 to 13 in a reaction vessel under strong stirring, an acidic solution containing a nickel ion and an acidic aqueous solution of an ammonium salt are added. At this time, an aqueous alkaline solution is further added into the reaction vessel so as to maintain the pH of the aqueous solution in the reaction vessel at a constant value within the range of 10 to 13. This operation is conducted either successively or continuously, and then a suspension containing nickel hydroxide overflowing the top of the reaction vessel is collected. This suspension is filtered to obtain a precipitation, and the obtained precipitation is washed with water to yield a nickel hydroxide powder. In order to prepare a solid solution nickel hydroxide powder, it is effective that the acidic solution containing a nickel ion further contains at least an ion of Co, Cd, Zn, Mg, Ca, Sr, Ba, Al or Mn.

In the case where cobalt hydroxide is attached to the surface of a nickel hydroxide powder, the nickel hydroxide powder is dispersed in an aqueous alkaline solution having a constant pH in the range from 9 to 12 in a reaction vessel. Subsequently, an acidic aqueous solution of cobalt ion is added into the solution, along with either an aqueous ammonia solution or an acidic aqueous solution of an ammonium salt. At this time, an aqueous alkaline solution is further added in the reaction vessel so as to maintain the pH of the aqueous solution in the reaction vessel at a constant value within the range of 9 to 12. Thereafter, the powder is separated from the suspension in the reaction vessel, washed and dried to give a desired powder. Or alternatively, other methods, for example, a method in which a nickel hydroxide powder is mixed with a cobalt hydroxide fine powder may be employed.

In the above-described method, it is possible to manipulate the composition, particle circularity, particle size, specific surface area and crystallinity of the obtained active material by managing and controlling the composition, concentration, temperature and flow rate of each of the various solutions, as well as the temperature, pH, stirring rate and retention time of the aqueous solution in the reaction vessel. According to the above method, it is also possible to constantly produce a desired powder. In order to make the particle size distribution of the powder even sharper, it is effective to classify the powder by means of a classifier such as a wet or dry centrifugal classifier.

The positive electrode of the present invention is able to be produced by preparing a paste containing the above-described active material, adding the paste thus obtained to a metal substrate serving as a current collector (e.g. a foamed metal sheet) and rolling the substrate with the active material. It is preferred that the paste contain 0.1 to 5 parts by weight of an additive selected from the group consisting of yttrium oxide, ytterbium oxide and lutetium oxide, 0.05 to 0.5 part by weight of a thickener and 0.05 to 0.5 part by weight of a binder, per 100 parts by weight of the active material. As the thickener, for example, celluloses such as carboxymethyl cellulose, poly(ethylene oxide), or poly(vinyl alcohol) is preferably used. As the binder, for example, polytetrafluoroethylene or a fluorine-containing rubber is preferably used.

### EXAMPLES

In the following, the present invention will be concretely described by reference to examples, but the present invention is not limited to these examples.

### (i) Production of positive electrode active material

### Powder of Example 1

An aqueous solution of sulfate at 25°C containing nickel ion and zinc ion at a molar ratio of 9:1 was prepared. This aqueous solution of sulfate was continuously supplied, along with an aqueous solution of ammonium sulfate, into an aqueous solution of sodium hydroxide at 35°C having a pH of 12 in a reaction vessel under stirring, constantly. At the same time, an aqueous solution of sodium hydroxide at 25°C was continuously supplied into the reaction vessel, constantly. Also, the concentrations and temperatures of the aqueous solution of sulfate and the aqueous solution of sodium hydroxide were each maintained constant. The temperature in the reaction vessel was also maintained constant by means of a heater. During the operation, the pH of water in the reaction vessel was observed to be 12. Then, a suspension constantly overflowing the reaction vessel was filtered to obtain a precipitation, and the obtained precipitation was washed with water and dried to give Powder of Example 1.

### Powder of Example 2

Powder of Example 2 was obtained in the same manner as that used for the production of Powder of Example 1 except that the stirring rate was increased for the aqueous solution of sodium hydroxide in the reaction vessel at 35°C having a pH of 12.

### Powder of Example 3

Particles having relatively smaller sizes were removed from the particles contained in Powder of Example 2 by means of a dry centrifugal classifier (Cyclone) to give Powder of Example 3.

### Powder of Example 4

Powder of Example 3 was dispersed in an aqueous solution of sodium hydroxide having a pH of 10 in a reaction vessel. Subsequently, an aqueous solution of cobalt sulfate, and an aqueous solution of ammonium sulfate and hydrazine were added dropwise into the solution in the reaction vessel. Further, an aqueous solution of sodium hydroxide was added dropwise into the reaction vessel so as to maintain the pH of the aqueous solution in the reaction vessel at 10. At this time, the amount of the aqueous solution of cobalt sulfate was adjusted such that 5 parts by weight of cobalt hydroxide per 100 parts by weight of nickel hydroxide was precipitated on the surface of the nickel hydroxide particles. These operations yielded Powder of Example 4, which was a solid solution nickel hydroxide powder having cobalt hydroxide attached to the surface thereof.

### Powder of Comparative Example 1

An aqueous solution of sulfate containing nickel ion and zinc ion at a molar ratio of 9:1 was prepared. This aqueous solution of sulfate was continuously supplied, along with an aqueous solution of ammonium sulfate, into an aqueous solution of sodium hydroxide at 35°C having a pH of 12 in a reaction vessel under stirring, constantly. Herein, the stirring rate for the aqueous solution of sodium hydroxide was decreased to half the stirring rate used for manufacturing Powder of Example 1. At the same time, an aqueous solution of sodium hydroxide was intermittently supplied into the reaction vessel so as to maintain the pH value of a pH meter installed in the reaction vessel at approximately 12. Whereas the temperatures in the reaction vessel was maintained constant by means of a heater, the temperatures of the aqueous solution of sulfate and the aqueous solution of sodium hydroxide each supplied into the reaction vessel were not controlled. Then, the suspension constantly overflowing the reaction vessel was filtered to obtain a precipitation, and the obtained precipitation was washed with water and dried to give Powder of Comparative Example 1.

### (ii) Evaluation of physical properties of powder

The following are the evaluated items and the evaluating apparatus.
(1) Chemical composition:
   ICP elemental quantification method
(2) Particle size distribution/Particle circularity:
   Flow type particle image analyzer manufactured by Sysmex, FPIA-2100
(3) Specific surface area:
   ASAP2000 manufactured by SHIMADZU CORPORATION BET method with Nitrogen adsorption
(4) X-ray diffraction pattern:
   RINT2000 manufactured by Rigaku Corporation Measurement condition; tube voltage 40 mV, tube current 40 mA
   Cu target

### (iii) Result of measurement on physical properties of powder

Powder of Example 1 was a solid solution nickel hydroxide powder containing 6.3 wt% of Zn. Powder of Example 1 had a mean circularity of 0.95, a mean particle size of 13.0 µm on a volume basis and a specific surface area of 12 m²/g. Further, Powder of Example 1 had an X-ray diffraction pattern where the FWHM of a peak attributed to (101) face was 0.95 deg/2θ and the peak intensity ratio of a peak attributed to (001) face/a peak attributed to (101) face was 1.4. The number of particles having a circularity of not larger than 0.85 accounted for 10% of the number of total particles within Powder of Example 1. In the volume basis size distribution of particles within Powder of Example 1, the particle size coordinate was 3.5 µm at a point where the cumulative volume accounted for 10% of the total volume.

Powder of Example 2 was a solid solution nickel hydroxide powder containing 6.3 wt% of Zn. Powder of Example 2 had a mean particle circularity of 0.96, a mean particle size of 12.8 µm on a volume basis and a specific surface area of 12 m²/g. Further, Powder of Example 2 had an X-ray diffraction pattern where the FWHM of a peak attributed to (101) face was 0.95 deg/2θ and the peak intensity ratio of a peak attributed to (001) face/a peak attributed to (101) face was 1.4. The number of particles having a circularity of not larger than 0.85 accounted for 5% of the number of total particles within Powder of Example 2. In the volume basis size distribution of particles within Powder of Example 2, the particle size coordinate was 3.3 µm at a point where the cumulative volume accounted for 10% of the total volume. In the case of Powder of Example 2, the frequency of the number of particles having a circularity of not larger than 0.85 was less than that of Powder of Example 1.

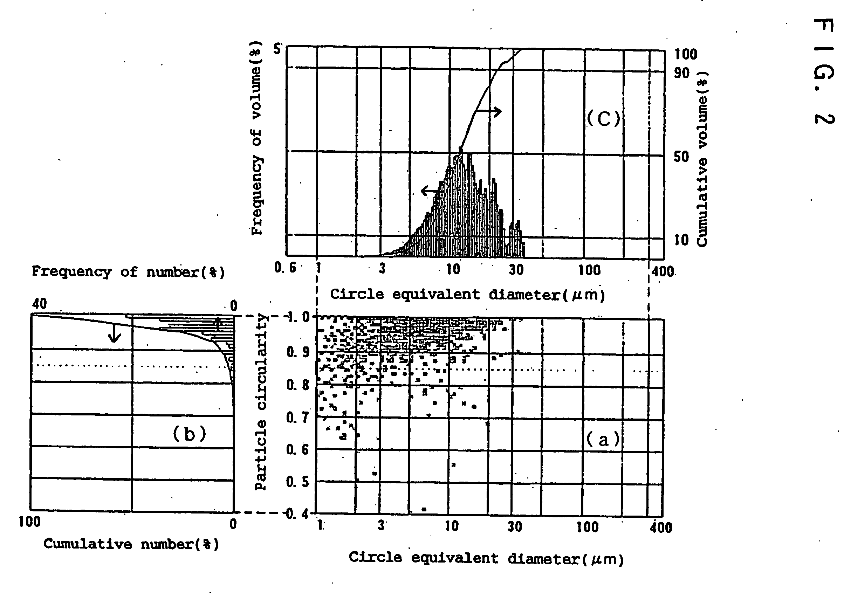

Powder of Example 3 was a solid solution nickel hydroxide powder containing 6.3 wt% of Zn. Powder of Example 3 had a mean particle circularity of 0.97, a mean particle size of 14.0 µm on a volume basis and a specific surface area of 11 m²/g. Further, Powder of Example 3 had an X-ray diffraction pattern where the FWHM of a peak attributed to (101) face was 0.95 deg/2θ and the peak intensity ratio of a peak attributed to (001) face/a peak attributed to (101) face was 1.4. The number of particles having a circularity of not larger than 0.85 accounted for 2.5% of the number of total particles within Powder of Example 3. In the volume basis size distribution of particles within Powder of Example 3, the particle size coordinate was 6.4 µm at a point where the cumulative volume accounted for 10% of the total volume (see FIG. 2 (c)). Although the particles having a size of not larger than 3 µm was not be able to be completely removed by the classification process, the share of the particles having a size of not larger than 3 µm in Powder of Example 3 was less than that in Powder of Example 2.

Powder of Example 4 was a solid solution nickel hydroxide powder containing 6.0 wt% of Zn and carrying 5 wt% of cobalt hydroxide to the amount of nickel hydroxide on the surface thereof. Powder of Example 4 had a mean particle circularity of 0.96, a mean particle size of 14.2 µm on a volume basis, and a specific surface area of 8 m²/g. Further, Powder of Example 4 had an X-ray diffraction pattern where the FWHM of a peak attributed to (101) face was 0.98 deg/2θ and the peak intensity ratio of a peak attributed to (001) face/a peak attributed to (101) face was 1.4. The number of particles having a circularity of not larger than 0.85 accounted for 2.6% of the number of total particles within Powder of Example 4. In the volume basis size distribution of particles within Powder of Example 4, the particle size coordinate was 6.2 µm at a point where the cumulative volume accounted for 10% of the total volume.

Powder of Comparative Example 1 was a solid solution nickel hydroxide powder containing 6.3 wt% of Zn. Powder of Comparative Example 1 had a mean particle circularity of 0.94, a mean particle size of 14.0 µm on a volume basis and a specific surface area of 14 m²/g. Further, Powder of Comparative Example 1 had an X-ray diffraction pattern where the FWHM of a peak attributed to (101) face was 0.95 deg/2θ and the peak intensity ratio of a peak attributed to (001) face/a peak attributed to (101) face was 1.4. The number of particles having a circularity of not larger than 0.85 accounted for 10.0% of the number of total particles within Powder of Comparative Example 1. In the volume basis size distribution of particles within Powder of Comparative Example 1, the particle size coordinate was 2.8 µm at a point where the cumulative volume accounted for 10% of the total volume.

As described above, Powders of Examples 1 to 3, each of which was a solid solution nickel hydroxide powder, and Powder of Example 4, which was a nickel hydroxide powder having cobalt hydroxide attached to the surface thereof, had a mean particle circularity from not smaller than 0.95 to not larger than 1, whereas Powder of Comparative Example 1 had a mean particle circularity of 0.94.

FIG. 2 shows graphs respectively depicting: (a) distribution demonstrating the relation between a particle size as a circle equivalent diameter and a particle circularity; (b) number basis distribution of particle circularity; and (c) volume basis size distribution determined from a circle equivalent diameter, for Powder of Example 3. In the distribution (a), the darker the area is, the higher the frequency is.

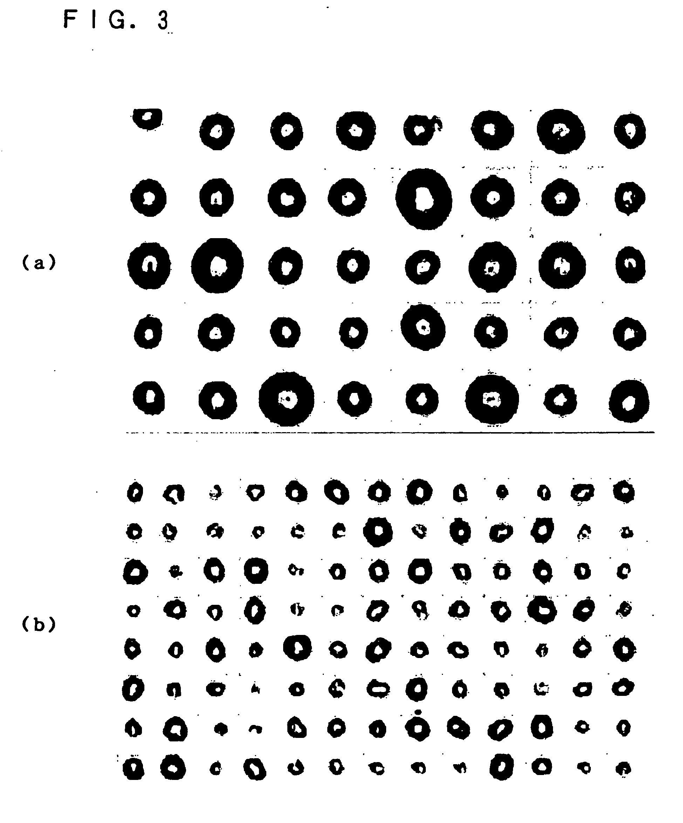

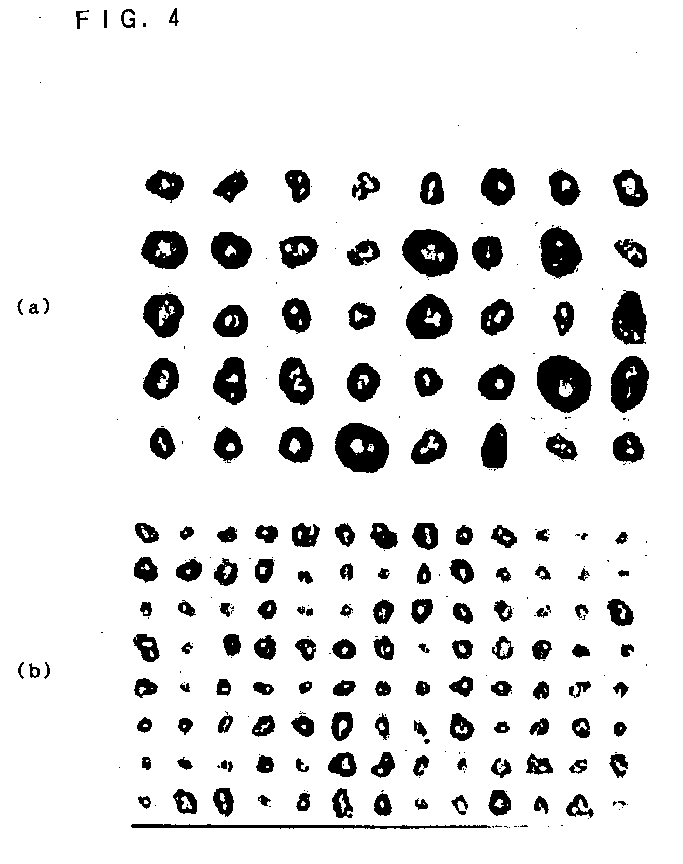

FIG. 3 shows images of particles contained in Powder of Example 3: image (a) of particles having a particle size from not smaller than 10 µm to not larger than 20 µm; and image (b) of particles having a particle size from not smaller than 5 µm to smaller than 10 µm. Similarly, FIG. 4 shows images of particles contained in Powder of Comparative Example 1: image (a) of particles having a particle size from not smaller than 10 µm to not larger than 20 µm; and image (b) of particles having a particle size from not smaller than 5 µm to smaller than 10 µm. From the comparison between these figures, it was found that the particles of Powder of Example 3 shown in FIG. 3 had a higher circularity than the particles of Powder of Comparative Example 1 shown in FIG. 4. It was also found that among the particles shown in FIG. 3, many of the particles having a small size had a small circularity.

### (iv) Fabrication of electrode

### Positive electrode of Example 1

To 100 parts by weight of Powder of Example 1, 5 parts by weight of cobalt hydroxide having a mean particle size of 0.5 µm, 0.5 part by weight of yttrium oxide, 0.1 part by weight of carboxymethyl cellulose (CMC) as a thickener and 0.2 part by weight of polytetrafluoroethylene (PTFE) as a binder were added. The obtained mixture was further added with 30 parts by weight of pure water and mixed by stirring to give a paste. The paste thus obtained was successively applied and filled, via a die nozzle, to a foamed metal sheet having a three-dimentional structure and a pore size of approximately 500 µm, which was being conveyed at a constant speed. The foamed metal sheet added with the paste was dried and then rolled by means of a roll presser. Thereafter, the sheet was cut into a predetermined size to obtain a plurality (1000 or more pieces) of Positive electrodes of Example 1.

### Positive electrode of Example 2

1000 or more pieces of Positive electrodes of Example 2 were fabricated in the same manner as that used for Positive electrodes of Example 1, except for the use of Powder of Example 2.

### Positive electrode of Example 3

1000 or more pieces of Positive electrodes of Example 3 were fabricated in the same manner as that used for Positive electrodes of Example 1, except for the use of Powder of Example 3.

### Positive electrode of Example 4

To 105 parts by weight of Powder of Example 4 (a powder comprising 100 parts by weight of the solid solution nickel hydroxide powder and 5 parts by weight of cobalt hydroxide attached to the surface thereof), 0.5 part by weight of yttrium oxide, 0.1 part by weight of carboxymethyl cellulose (CMC) as a thickener and 0.2 part by weight of polytetrafluoroethylene (PTFE) as a binder were added. The obtained mixture was further added with 30 parts by weight of pure water and mixed by stirring to give a paste. The paste thus obtained was successively applied and filled, via a die nozzle, to the same foamed metal sheet as used for Positive electrode of Example 1, which was being conveyed at a constant speed. The foamed metal sheet added with the paste was dried and then rolled by means of a roll presser. Thereafter, the sheet was cut into a predetermined size to obtain 1000 or more pieces of Positive electrodes of Example 4.

### Positive electrode of Comparative Example 1

1000 or more pieces of Positive electrodes of Comparative Example 1 were fabricated in the same manner as that used for Positive electrodes of Example 1, except for the use of Powder of Comparative Example 1.

### (v) Evaluation of filled amount of active material in positive electrode

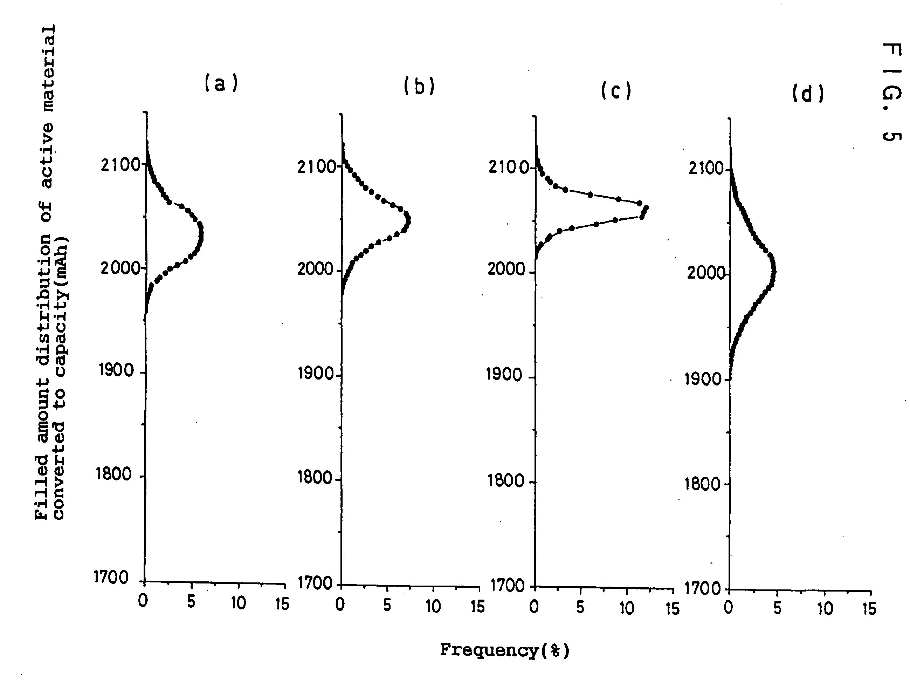

Evaluation was made on the filled amount of the active material for each of the obtained a plurality (1000 or more pieces, respectively) of Positive electrodes of Examples 1 to 3 and Positive electrodes of Comparative Example 1. The distributions of the filled amount of the active material of Positive electrodes of Examples 1 to 3 are respectively shown in graphs (a) to (c) in FIG. 5. The distribution of the filled amount of the active material of Positive electrodes of Comparative Example 1 is shown in graph (d) in FIG. 5. Each filled amount was converted to a capacity by calculation, with the capacity to be gained by one electron reaction of nickel hydroxide taken at 289 mAh/g. From FIG. 5, it was shown that the order of the variations in filled amount was Battery of Example 3 < Battery of Example 2 < Battery of Example 1 << Battery of Comparative Example 1. Therefore, it could be said that each of Positive electrodes of Examples was more uniform than Positive electrode of Comparative Example 1 in theoretical capacity.

### (vi) Fabrication of battery

Next, nickel-metal hydride storage batteries of 4/5 SC size were fabricated by using a plurality of the respective Positive electrodes of Examples 1 to 4 and Comparative Example 1.

### Battery of Example 1

First, a Positive electrode of Example 1 and a negative electrode were laminated with a separator interposed therebetween, and the whole was rolled up to obtain a spiral electrode assembly. A nonwoven fabric of polypropylene having hydrophilicity was used as the separator. A positive electrode current collector and a negative electrode current collector were disposed on the top and bottom of the electrode assembly, respectively. Thereafter, the electrode assembly was placed in a metal case. At this time, the negative electrode current collector was electrically connected to the bottom of the metal case, whereas the positive electrode current collector was electrically connected to a sealing plate equipped with a safety valve. Then, an electrolyte was injected into the metal case, and the case was sealed to obtain a Battery of Example 1.

The negative electrode used herein was obtained by applying onto metal foil, a predetermined negative electrode mixture paste comprising a hydrogen storage alloy, and then drying and press forming the metal foil with the paste. As the electrolyte, an aqueous alkaline solution containing potassium hydroxide, sodium hydroxide and lithium hydroxide in the respective concentrations of 4 mol/L, 3 mol/L and 1 mol/L was used.

In Batteries of Example 1, the theoretical capacity of the negative electrode was made 1.4 times higher than the theoretical capacity of the positive electrode (a value obtained by multiplying the amount of nickel hydroxide (g) by the capacity to be gained from one electron reaction of nickel hydroxide: 289 mAh/g). In addition, the space in the battery excluding the space occupied by the materials and components was set at approximately 1.2 cc.

### Battery of Example 2

Batteries of Example 2 were fabricated in the same manner as that used for Batteries of Example 1, except for the use of Positive electrodes of Example 2 in place of Positive electrodes of Example 1.

### Battery of Example 3

Batteries of Example 3 were fabricated in the same manner as that used for Batteries of Example 1, except for the use of Positive electrodes of Example 3 in place of Positive electrodes of Example 1.

### Battery of Example 4

Batteries of Example 4 were fabricated in the same manner as that used for Batteries of Example 1, except for the use of Positive electrodes of Example 4 in place of Positive electrodes of Example 1.

### Battery of Comparative Example 1

Batteries of Comparative Example 1 were fabricated in the same manner as that used for Batteries of Example 1, except for the use of Positive electrodes of Comparative Example 1 in place of Positive electrodes of Example 1.

### (vii) Evaluation of battery

Each of Batteries of Examples 1 to 4 and Comparative Example 1 was stood still for 24 hours after fabrication. Subsequently, the battery was charged at 20°C at a current of 0.2 A for 15 hours, and then stood still at 20°C for one hour. Thereafter, the battery was discharged at 20°C at a current of 0.4 A until the voltage decreased to 1 V. Such charging/discharging operation was repeated twice, and then the battery was aged at 45°C for one week, thereby obtaining a test battery. By using the test battery, the following evaluation was conducted.

### (High-rate discharge characteristic)

Each test battery was charged at a current of 0.2 A at 20°C for 15 hours, and then stood still at an ambient temperature of 20°C for one hour. Subsequently, the battery is discharged at a current of 0:4 A at 20°C until the voltage decreased to 1 V. Furthermore, the battery was charged under the same conditions as described above and then discharged at a current of 10 A. From the discharging time at a current of 0.4 A and the discharging time at a current of 10 A, the battery capacity was calculated for the respective discharging processes. Additionally, the capacity at a current of 10 A "C_{10A}" was divided by the capacity at a current of 0.4 A "C_{0.4A}" to obtain a percentage value (%).

### (Capacity maintenance rate)

By the charging method (ΔT/Δt) of detecting a temperature increase per unit hour, each test battery was charged at a current of 4.0 A, and then suspended for one hour. Thereafter, the battery was discharged at a current of 10 A until the voltage decreased to 0.6 V. Such charge and discharge cycle was repeated at 20°C. Then, the discharge capacity at 500th cycle "C₅₀₀" was divided by the initial discharge capacity "Cᵢₙᵢ" to obtain a percentage value (%: versus the initial capacity).

The obtained result, i.e. the battery capacity "C₀._{4A}", percentage value "(C_{10A}/C_{0.4A})×100(%)" and capacity maintenance rate "(C₅₀₀/Cᵢₙᵢ)×100(%)" are shown in TABLE 1.

### TABLE 1

| | C_{0.4A} (mAh) | C_{10A}/C_{0.4A} ×100(%) | C₅₀₀/Cᵢₙᵢ ×100(%) |
|---|---|---|---|
| Battery of Example 1 | 2105 | 96 | 92 |
| Battery of Example 2 | 2153 | 97 | 95 |
| Battery of Example 3 | 2189 | 98 | 97 |
| Battery of Example 4 | 2205 | 98 | 98 |
| Battery of Com. Ex: 1 | 2058 | 94 | 88 |

In TABLE 1, the order of the battery capacity was Battery of Example 4 > Battery of Example 3 > Battery of Example 2 > Battery of Example 1 >> Battery of Comparative Example 1. A similar order was also observed for the high-rate discharge characteristic and the capacity maintenance rate (cycle life). These results indicated that a battery having not only higher capacity but also longer cycle life was able to be obtained by improving the particle circularity and particle size uniformity of the active material.

It should be noted that although the above Examples employed a solid solution nickel hydroxide powder containing Zn and a solid solution nickel hydroxide powder having cobalt hydroxide attached to the surface thereof, similar effect is thought to be obtained with the use of any nickel hydroxide powder containing Co, Cd, Zn, Mg, Ca, Sr, Ba, Al, Mn or the like.

Moreover, when such nickel hydroxide powder has a mean particle circularity from not smaller than 0.95 to not larger than 1, a mean particle size from not smaller than 5 µm to not larger than 20 µm on a volume basis, a specific surface area of not smaller than 5 m²/g to not larger than 20 m²/g and an X-ray diffraction pattern where a full width at half maximum of a peak attributed to (101) face is from not less than 0.7 deg/2θ to not more than 1.2 deg/2θ and a peak intensity ratio of a peak attributed to (001) face to a peak attributed to (101) face is not less than 1.1, it is possible to provide a high-capacity battery exhibiting a superior charge and discharge characteristic for a long period of time.

Furthermore, it is considered that the effect of the present invention can also be obtained when a solid solution nickel oxyhydroxide powder or a solid solution nickel oxyhydroxide powder having a cobalt compound attached to the surface thereof is used as the active material powder.

As described above, the present invention provides a uniform active material by converting the shapes of particles within an active material into numerical values and controlling the same. The present invention employs a uniform active material to control the physical properties of a paste containing the active material, thus facilitating the management per production batch. Also, the present invention reduces variations in the filled amounts of the active material in positive electrodes and thereby provides high-capacity batteries. Furthermore, according to the present invention, the shapes of particles within the active material are made uniform. This can reduce the distortion of particles during charging and discharging of the battery and suppress the swelling of the electrode due to the electrolyte, providing a battery with long cycle life.

## Claims

1. A positive electrode active material for an alkaline storage battery comprising:
at least one powder selected from the group consisting of a nickel hydroxide powder and a nickel oxyhydroxide powder,
wherein said nickel hydroxide powder has an X-ray diffraction pattern where a full width at half maximum of a peak attributed to (101) face is from not less than 0.7 deg/2θ to not more than 1.2 deg/2θ and a ratio of a peak intensity of a peak attributed to (001) face to a peak intensity of a peak attributed to (101) face is not less than 1.1, wherein
(1) said positive electrode active material has a mean particle circularity from not smaller than 0.95 to 1,
(2) said positive electrode active material has a mean particle size from not smaller than 5 µm to not larger than 20 µm on a volume basis, and
(3) said positive electrode active material has a specific surface area from not smaller than 5 m²/g to not larger than 20 m²/g.

2. The positive electrode active material for an alkaline storage battery in accordance with claim 1, wherein the whole or a portion of said positive electrode active material has a cobalt compound on a surface of said positive electrode active material.

3. The positive electrode active material for an alkaline storage battery in accordance with claim 1, wherein said nickel hydroxide powder comprises a solid solution nickel hydroxide containing at least one ion selected from the group consisting of Co, Cd, Zn, Mg, Ca, Sr, Ba, Al and Mn.

4. The positive electrode active material for an alkaline storage battery in accordance with claim 1, wherein said nickel oxyhydroxide powder comprises a solid solution nickel oxyhydroxide containing at least one ion selected from the group consisting of Co, Cd, Zn, Mg, Ca, Sr, Ba, Al and Mn.

5. The positive electrode active material for an alkaline storage battery in accordance with claim 1, wherein the number of particles having a circularity of not larger than 0.85 accounts for not more than 5% of the number of total particles within said positive electrode active material.

6. The positive electrode active material for an alkaline storage battery in accordance with claim 1, wherein, at a point where a cumulative volume accounts for 10% of a total volume in a volume basis size distribution of particles within said positive electrode active material, the particle size is not smaller than one-third of said mean particle size.

7. A positive electrode for an alkaline storage battery including the positive electrode active material in accordance with claim 1.

8. A method of producing a positive electrode for an alkaline storage battery comprising the steps of:
(a) preparing a paste containing a positive electrode active material according to claim 1; and
(b) adding said paste to a metal substrate serving as a current collector and then rolling said substrate with said paste to form an electrode plate.

## Patentansprüche

1. Aktives Material einer positiven Elektrode für einen alkalischen Akkumulator umfassed:
wenigstens ein Pulver ausgewählt aus der Gruppe bestehend aus Nickelhydroxidpulver und Nickeloxyhydroxidpulver,
wobei das Nickelhydroxidpulver ein Röntgenbeugungsmuster aufweist, bei dem die volle Breite auf der Hälfte des Maximums eines der (101)-Ebene zugeordneten Reflexes nicht weniger als 0,7°/26 und nicht mehr als 1,2°/2θ und das Verhältnis der Reflexintensität eines der (001)-Ebene zugeordneten Reflexes zu der Reflexintensität eines der (101)-Ebene zugeordneten Reflexes nicht weniger als 1,1 beträgt, wobei
(1) das aktive Material einer positiven Elektrode eine durchschnittliche Teilchenkreisförmigkeit von nicht kleiner als 0,95 bis 1 aufweist,
(2) das aktive Material einer positiven Elektrode eine mittlere Teilchengröße auf Volumenbasis von nicht kleiner als 5 µm bis nicht größer als 20 µm aufweist und
(3) das aktive Material einer positiven Elektrode eine spezifische Oberfläche von nicht kleiner als 5 m²/g bis nicht größer als 20 m²/g aufweist.

2. Aktives Material einer positiven Elektrode für einen alkalischen Akkumulator nach Anspruch 1, wobei das gesamte oder ein Teil des aktiven Materials einer positiven Elektrode auf der Oberfläche des aktiven Materials einer positiven Elektrode eine Cobaltverbindung aufweist.

3. Aktives Material einer positiven Elektrode für einen alkalischen Akkumulator nach Anspruch 1, wobei das Nickelhydroxidpulver ein Nickelhydroxid mit einer festen Lösung umfasst, die wenigstens ein Ion ausgewählt aus der Gruppe bestehend aus Co, Cd, Zn, Mg, Ca, Sr, Ba, Al und Mn enthält.

4. Aktives Material einer positiven Elektrode für einen alkalischen Akkumulator nach Anspruch 1, wobei das Nickeloxyhydroxidpulver ein Nickeloxyhydroxid mit einer festen Lösung umfasst, die wenigstens ein Ion ausgewählt aus der Gruppe bestehend aus Co, Cd, Zn, Mg, Ca, Sr, Ba, Al und Mn enthält.

5. Aktives Material einer positiven Elektrode für einen alkalischen Akkumulator nach Anspruch 1, wobei die Anzahl an Teilchen mit einer Kreisförmigkeit von nicht größer als 0,85 nicht mehr als 5 % der Anzahl aller Teilchen innerhalb des aktiven Materials einer positiven Elektrode ausmachen.

6. Aktives Material einer positiven Elektrode für einen alkalischen Akkumulator nach Anspruch 1, wobei an einem Punkt, an dem das kumulative Volumen 10 % des gesamten Volumens in einer Größenverteilung auf Volumenbasis der Teilchen innerhalb des aktiven Materials einer positiven Elektrode ausmacht, die Teilchengröße nicht kleiner als ein Drittel der mittleren Teilchengröße ist.

7. Positive Elektrode für einen alkalischen Akkumulator einschließlich des aktiven Materials einer positiven Elektrode nach Anspruch 1.

8. Verfahren zur Herstellung einer positiven Elektrode für einen alkalischen Akkumulator mit den Schritten:
(a) Zubereiten einer Paste, die das aktive Material einer positiven Elektrode nach Anspruch 1 enthält, und
(b) Zugeben der Paste zu einem Metallsubstrat, das als ein Stromsammler dient, und dann Walzen des Substrats mit der Paste, um eine Elektrodenplatte auszubilden.

## Revendications

1. Matériau actif d'électrode positive destiné à une batterie d'accumulateurs alcalins comprenant :
au moins une poudre sélectionnée à partir du groupe constitué d'une poudre d'hydroxyde de nickel et d'une poudre d'oxyhydroxyde de nickel,
où ladite poudre d'hydroxyde de nickel présente un diagramme de diffraction de rayons X où une largeur à mi-hauteur d'un pic attribué à la face (101) se situe entre une valeur qui n'est pas inférieure à 0,7 deg/2θ et une valeur qui n'est pas supérieure à 1,2 deg/2θ et un rapport d'une intensité de pic d'un pic attribué à la face (001) sur une intensité de pic d'un pic attribué à la face (101) n'est pas inférieur à 1,1, où
(1) ledit matériau actif d'électrode positive présente une circularité de particules moyenne se situant entre une valeur qui n'est pas inférieure à 0,95 et 1,
(2) ledit matériau actif d'électrode positive présente une taille de particules moyenne se situant entre une valeur qui n'est pas inférieure à 5 µm et une valeur qui n'est pas supérieure à 20 µm sur une base du volume, et
(3) ledit matériau actif d'électrode positive présente une aire de surface spécifique se situant entre une valeur qui n'est pas inférieure à 5 m²/g et une valeur qui n'est pas supérieure à 20 m²/g.

2. Matériau actif d'électrode positive destiné à une batterie d'accumulateurs alcalins selon la revendication 1, dans lequel la globalité ou une partie dudit matériau actif d'électrode positive comporte un composé de cobalt sur une surface dudit matériau actif d'électrode positive.

3. Matériau actif d'électrode positive destiné à une batterie d'accumulateurs alcalins selon la revendication 1, dans lequel ladite poudre d'hydroxyde de nickel comprend un hydroxyde de nickel en solution solide contenant au moins un ion sélectionné à partir du groupe constitué de Co, Cd, Zn, Mg, Ca, Sr, Ba, Al et Mn.

4. Matériau actif d'électrode positive destiné à une batterie d'accumulateurs alcalins selon la revendication 1, dans lequel ladite poudre d'oxyhydroxyde de nickel comprend un oxyhydroxyde de nickel en solution solide contenant au moins un ion sélectionné à partir du groupe constitué de Co, Cd, Zn, Mg, Ca, Sr, Ba, Al et Mn.

5. Matériau actif d'électrode positive destiné à une batterie d'accumulateurs alcalins selon la revendication 1, dans lequel le nombre de particules présentant une circularité qui n'est pas supérieure à 0,85 ne représente pas plus de 5 % du nombre de particules totales à l'intérieur dudit matériau actif d'électrode positive.

6. Matériau actif d'électrode positive destiné à une batterie d'accumulateurs alcalins selon la revendication 1, dans lequel, à un point où un volume cumulé représente 10 % d'un volume total dans une répartition granulométrique fondée sur le volume à l'intérieur dudit matériau actif d'électrode positive, la taille des particules n'est pas inférieure à un tiers de ladite taille de particules moyenne.

7. Electrode positive destinée à une batterie d'accumulateurs alcalins comprenant le matériau actif d'électrode positive selon la revendication 1.

8. Procédé de fabrication d'une électrode positive destinée à une batterie d'accumulateurs alcalins comprenant les étapes consistant à :
(a) préparer une pâte contenant un matériau actif d'électrode positive selon la revendication 1, et
(b) ajouter ladite pâte à un substrat métallique servant de collecteur de courant et ensuite laminer ledit substrat avec ladite pâte pour former une plaque d'électrode.
